# EUROPEAN PATENT APPLICATION

(11) **EP 4 845 208 A1**
(43) Date of publication of application: **25.11.2026**
(21) Application number: 25742265.9
(22) Date of filing: 17.01.2025
(51) Int. Cl.: H04W 24/10, H04W 24/08, H04W 72/21, H04W 72/232, H04W 72/1268, H04B 7/06, H04B 17/318, H04B 17/336

(54) **METHOD AND DEVICE FOR PERFORMING UPLINK TRANSMISSION AND RECEPTION IN WIRELESS COMMUNICATION SYSTEM**

(30) Priority: 18.01.2024 KR 20240008191
(71) Applicant: LG Electronics Inc., Yeongdeungpo-gu Seoul 07336 (KR)
(72) Inventor: KANG, Jiwon, Seoul 06772 (KR); KIM, Hyungtae, Seoul 06772 (KR); KIM, Seonwook, Seoul 06772 (KR); YANG, Suckchel, Seoul 06772 (KR); GO, Seongwon, Seoul 06772 (KR)
(74) Representative: Plasseraud IP
(86) International application number: PCT/KR2025/000996
(87) International publication number: WO 2025/155126

(57) **Abstract**

Disclosed are a method and a device for performing uplink transmission and reception in a wireless communication system. The method according to an embodiment of the present disclosure may include the steps of: receiving, by a terminal from a base station, first configuration information related to a first uplink resource for transmission of first information; and on the basis of occurrence of a first event, transmitting, by the terminal, second information related to the first event to the base station through a first uplink channel based on the first uplink channel resource, wherein the first uplink channel includes third information related to whether the second information is information related to the first event.

## Description

### [Technical Field]

The present disclosure relates to a wireless communication system, and more specifically to a method and device for performing uplink transmission and reception in a wireless communication system.

### [Background]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

### [Disclosure]

### [Technical Problem]

The technical problem of the present disclosure is to provide a method and device for performing uplink transmission and reception in a wireless communication system.

Additionally, an additional technical objective of the present disclosure is to provide a method and device for performing an event-based transmission and reception procedure.

The technical objects to be achieved by the present disclosure are not limited to the above-described technical objects, and other technical objects which are not described herein will be clearly understood by those skilled in the pertinent art from the following description.

### [Technical Solution]

According to one embodiment of the present disclosure, a method may include receiving, by a user equipment (UE) from a base station, first configuration information related to a first uplink resource for transmission of first information; and based on an occurrence of a first event, transmitting, by the UE to the base station, second information related to the first event through a first uplink channel based on the first uplink resource, and the first uplink channel may include third information related to whether the second information is information related to the first event.

According to another embodiment of the present disclosure, a method may include transmitting, by a base station to a user equipment (UE), first configuration information related to a first uplink resource for transmission of first information; and based on an occurrence of a first event, receiving, by the base station from the UE, second information related to the first event through a first uplink channel based on the first uplink resource, and the first uplink channel may include third information related to whether the second information is information related to the first event.

### [Technical Effects]

According to an embodiment of the present disclosure, a method and device for performing uplink transmission and reception in a wireless communication system may be provided.

Additionally, by various embodiments of the present disclosure, a method and apparatus for performing an event-based transmission and reception procedure may be provided.

Additionally, by various embodiments of the present disclosure, overhead related to uplink resources for beam/CSI reporting may be reduced during an event-based transmission procedure.

Effects achievable by the present disclosure are not limited to the above-described effects, and other effects which are not described herein may be clearly understood by those skilled in the pertinent art from the following description.

### [Description of Diagrams]

Accompanying drawings included as part of detailed description for understanding the present disclosure provide embodiments of the present disclosure and describe technical features of the present disclosure with detailed description.
FIG. 1 illustrates a structure of a wireless communication system to which the present disclosure may be applied.
FIG. 2 illustrates a frame structure in a wireless communication system to which the present disclosure may be applied.
FIG. 3 illustrates a resource grid in a wireless communication system to which the present disclosure may be applied.
FIG. 4 illustrates a physical resource block in a wireless communication system to which the present disclosure may be applied.
FIG. 5 illustrates a slot structure in a wireless communication system to which the present disclosure may be applied.
FIG. 6 illustrates physical channels used in a wireless communication system to which the present disclosure may be applied and a general signal transmission and reception method using them.
FIG. 7 is a flowchart illustrating a method for a UE to perform a communication procedure according to an embodiment of the present disclosure.
FIG. 8 is a flowchart illustrating a method for a base station to perform a communication procedure according to an embodiment of the present disclosure.
FIG. 9 is a diagram illustrating a signaling process according to an embodiment of the present disclosure.
FIG. 10 is a diagram illustrating a block configuration of a wireless communication device according to an embodiment of the present disclosure.

### [Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point(AP), a Network(5G network), an AI(Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11(Wi-Fi), IEEE 802.16(WiMAX), IEEE 802-20, E-UTRA(Evolved UTRA), etc. UTRA is a part of a UMTS(Universal Mobile Telecommunications System). 3GPP(3rd Generation Partnership Project) LTE(Long Term Evolution) is a part of an E-UMTS(Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system. "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212(multiplexing and channel coding), TS 36.213(physical layer procedures), TS 36.300(overall description), TS 36.331(radio resource control) may be referred to.

For 3GPP NR, TS 38.211(physical channels and modulation), TS 38.212(multiplexing and channel coding), TS 38.213(physical layer procedures for control), TS 38.214(physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.
- BM: beam management
- CQI: Channel Quality Indicator
- CRI: channel state information - reference signal resource indicator
- CSI: channel state information
- CSI-IM: channel state information - interference measurement
- CSI-RS: channel state information - reference signal
- DMRS: demodulation reference signal
- FDM: frequency division multiplexing
- FFT: fast Fourier transform
- IFDMA: interleaved frequency division multiple access
- IFFT: inverse fast Fourier transform
- L1-RSRP: Layer 1 reference signal received power
- L1-RSRQ: Layer 1 reference signal received quality
- MAC: medium access control
- NZP: non-zero power
- OFDM: orthogonal frequency division multiplexing
- PDCCH: physical downlink control channel
- PDSCH: physical downlink shared channel
- PMI: precoding matrix indicator
- RE: resource element
- RI: Rank indicator
- RRC: radio resource control
- RSSI: received signal strength indicator
- Rx: Reception
- QCL: quasi co-location
- SINR: signal to interference and noise ratio
- SSB (or SS/PBCH block): Synchronization signal block (including PSS (primary synchronization signal), SSS (secondary synchronization signal) and PBCH (physical broadcast channel))
- TDM: time division multiplexing
- TRP: transmission and reception point
- TRS: tracking reference signal
- Tx: transmission
- UE: user equipment
- ZP: zero power

### Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

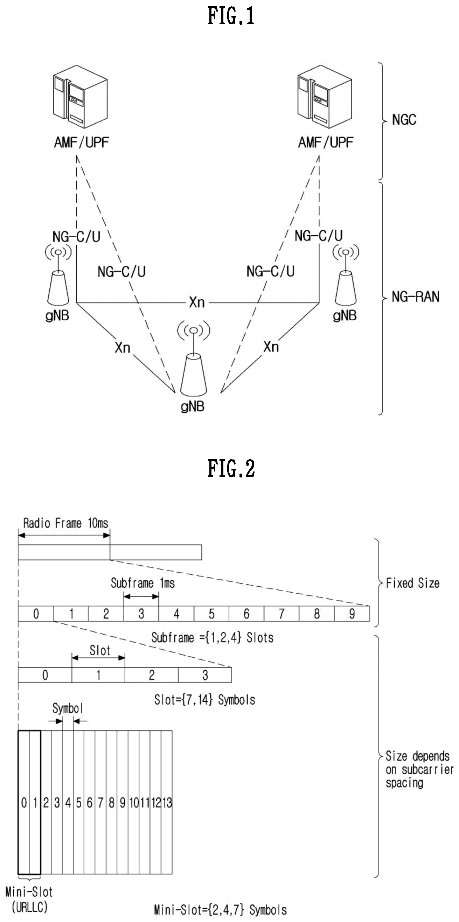

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, µ). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

**[Table 1]**

| µ | Δf=2^{µ}·15 [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise. An NR frequency band is defined as a frequency range in two types (FR1, FR2). FR1, FR2 may be configured as in the following Table 2. In addition, FR2 may mean a millimeter wave (mmW).

**[Table 2]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, a size of a variety of fields in a time domain is expresses as a multiple of a time unit of T_{c}=1/(Δfₘₐₓ·N_{f}). Here, Δfₘₐₓ is 480·10³ Hz and N_{f} is 4096. Downlink and uplink transmission is configured (organized) with a radio frame having a duration of T_{f}=1/(ΔfₘₐₓN_{f}/100)·T_{c}=10ms. Here, a radio frame is configured with 10 sub frames having a duration of T_{sf}=(ΔfₘₐₓN_{f}/1000)·T_{c}=1ms, respectively. In this case, there may be one set of frames for an uplink and one set of frames for a downlink. In addition, transmission in an uplink frame No. i from a terminal should start earlier by T_{TA}=(N_{TA}+N_{TA,offset})T_{c} than a corresponding downlink frame in a corresponding terminal starts. For a subcarrier spacing configuration µ, slots are numbered in an increasing order of nₛ^{µ}∈{0,..., Nₛₗₒₜ^{subname,µ}-1} in a subframe and are numbered in an increasing order of n_{s,f}^{µ}∈{0,..., Nₛₗₒₜ^{frame,µ}-1} in a radio frame. One slot is configured with N_{symb}^{slot} consecutive OFDM symbols and N_{symb}^{slot} is determined according to CP. A start of a slot nₛ^{µ} in a subframe is temporally arranged with a start of an OFDM symbol nₛ^{µ}N_{symb}^{slot} in the same subframe. All terminals may not perform transmission and reception at the same time, which means that all OFDM symbols of a downlink slot or an uplink slot may not be used.

Table 3 represents the number of OFDM symbols per slot (N_{symb}^{slot}), the number of slots per radio frame (Nₛₗₒₜ^{frame,µ}) and the number of slots per subframe (Nₛₗₒₜ^{subfram,µ}) in a normal CP and Table 4 represents the number of OFDM symbols per slot, the number of slots per radio frame and the number of slots per subframe in an extended CP.

**[Table 3]**

| µ | N_{symb}^{slot} | Nₛₗₒₜ^{frame,µ} | Nₛₗₒₜ^{subframe,µ} |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

**[Table 4]**

| µ | N_{symb}^{slot} | Nₛₗₒₜ^{frame,µ} | Nₛₗₒₜ^{subframe,µ} |
|---|---|---|---|
| 2 | 12 | 40 | 4 |

FIG. 2 is an example on µ=2 (SCS is 60kHz), 1 subframe may include 4 slots referring to Table 3. 1 subframe={ 1,2,4} slot shown in FIG. 2 is an example, the number of slots which may be included in 1 subframe is defined as in Table 3 or Table 4. In addition, a mini-slot may include 2, 4 or 7 symbols or more or less symbols. Regarding a physical resource in a NR system, an antenna port, a resource grid, a resource element, a resource block, a carrier part, etc. may be considered.

Hereinafter, the physical resources which may be considered in an NR system will be described in detail. First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing.

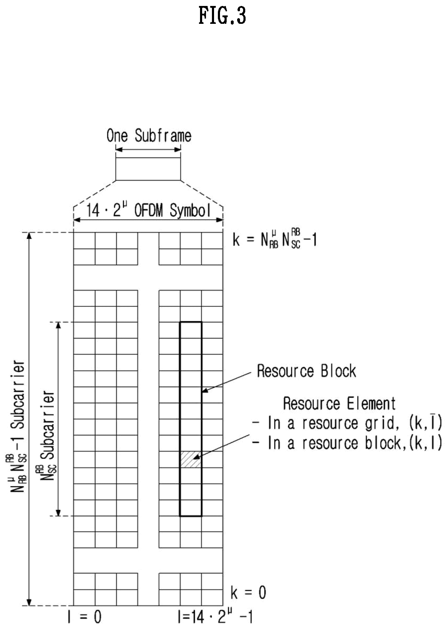

FIG. 3 illustrates a resource grid in a wireless communication system to which the present disclosure may be applied. In reference to FIG. 3, it is illustratively described that a resource grid is configured with N_{RB}^{µ}N_{sc}^{RB} subcarriers in a frequency domain and one subframe is configured with 14·2^{µ} OFDM symbols, but it is not limited thereto. In an NR system, a transmitted signal is described by OFDM symbols of 2^{µ}N_{symb}^{(µ)} and one or more resource grids configured with N_{RB}^{µ}N_{sc}^{RB} subcarriers. Here, N_{RB}^{µ}≤N_{RB}^{max,µ}. The N_{RB}^{max,µ} represents a maximum transmission bandwidth, which may be different between an uplink and a downlink as well as between numerologies. In this case, one resource grid may be configured per µ and antenna port p. Each element of a resource grid for µ and an antenna port p is referred to as a resource element and is uniquely identified by an index pair (k,l').

Here, k=0,...,N_{RB}^{µ}N_{sc}^{RB}-1 is an index in a frequency domain and l'=0,...,2^{µ}N_{symb}^{(µ)}-1 refers to a position of a symbol in a subframe. When referring to a resource element in a slot, an index pair (k,l) is used. Here, l=0,...,N_{symb}^{µ}-1. A resource element (k,l') for µ and an antenna port p corresponds to a complex value, a_{k,l'}^{(p,µ)}. When there is no risk of confusion or when a specific antenna port or numerology is not specified, indexes p and µ may be dropped, whereupon a complex value may be a_{k,l'}^{(p)} or a_{k,l'}. In addition, a resource block (RB) is defined as N_{sc}^{RB}=12 consecutive subcarriers in a frequency domain.

Point A plays a role as a common reference point of a resource block grid and is obtained as follows.
offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.
absoluteFrequencyPointA represents a frequency-position of point A expressed as in ARFCN (absolute radio-frequency channel number).

Common resource blocks are numbered from 0 to the top in a frequency domain for a subcarrier spacing configuration µ. The center of subcarrier 0 of common resource block 0 for a subcarrier spacing configuration µ is identical to 'point A'. A relationship between a common resource block number n_{CRB}^{µ} and a resource element (k,l) for a subcarrier spacing configuration µ in a frequency domain is given as in the following Equation 1. [Equation 1] ${n}_{CRB}^{μ} = \left⌊\frac{k}{{N}_{sc}^{RB}}\right⌋$

In Equation 1, k is defined relatively to point A so that k=0 corresponds to a subcarrier centering in point A. Physical resource blocks are numbered from 0 to N_{BWP,i}^{size,µ}-1 in a bandwidth part (BWP) and i is a number of a BWP. A relationship between a physical resource block n_{PRB} and a common resource block n_{CRB} in BWP i is given by the following Equation 2. [Equation 2] ${n}_{CRB}^{μ} = {n}_{PRB}^{μ} + {N}_{BWP , i}^{start , μ}$

N_{BWP,i}^{start,µ} is a common resource block that a BWP starts relatively to common resource block 0.

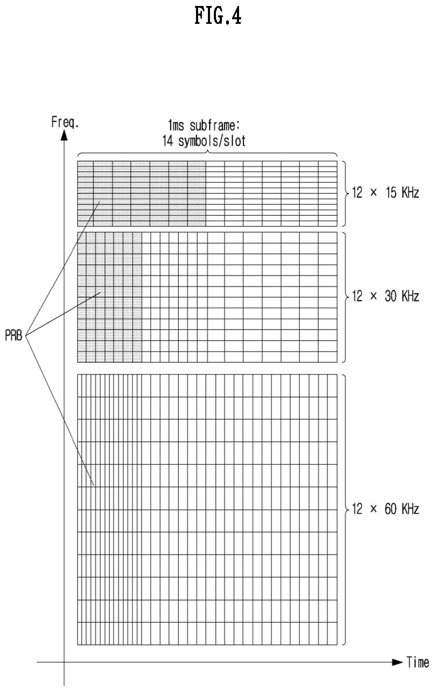

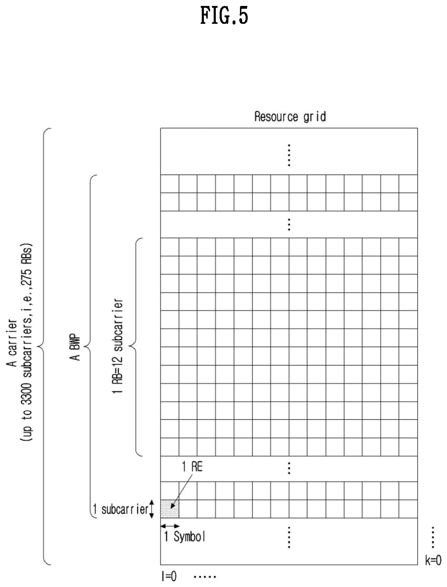

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP.

Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC.

A base station may activate at least one DL/UL BWP of configured DL/UL BWP(s) at a specific time (by L1 signaling or MAC CE(Control Element) or RRC signaling, etc.). In addition, a base station may indicate switching to other configured DL/UL BWP (by L1 signaling or MAC CE or RRC signaling, etc.). Alternatively, based on a timer, when a timer value is expired, it may be switched to a determined DL/UL BWP. Here, an activated DL/UL BWP is defined as an active DL/UL BWP. But, a configuration on a DL/UL BWP may not be received when a terminal performs an initial access procedure or before a RRC connection is set up, so a DL/UL BWP which is assumed by a terminal under these situations is defined as an initial active DL/UL BWP.

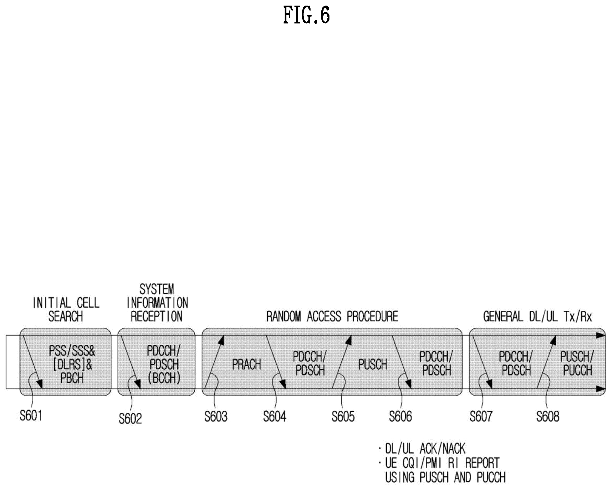

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH(Physical Uplink Shared Channel)/PUCCH(physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

**[Table 5]**

| DCI Format | Use |
|---|---|
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be pre-defined.

DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted. DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted. DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block)-PRB(physical resource block) mapping, etc.), information related to a transport block(TB)(e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

### Basic beam failure recovery (BFR)

The UE and/or the base station may perform uplink/downlink beam management (BM) for data transmission/reception. Here, BM may refer to a process of obtaining and maintaining a beam set that can be used for downlink and uplink transmission/reception.

Specifically, BM may include a beam measurement process of measuring the characteristics of a beamforming signal received from a base station or a UE, a beam determination process of determining a transmission beam (Tx beam) and a reception beam (Rx beam) of the base station or the terminal itself, a beam sweeping process of covering a spatial region using a transmit beam and/or a receive beam for a predetermined time interval in a predetermined manner, and a beam reporting process in which the UE reports information of the beam signal to the base station based on the beam measurement result.

While the above-described uplink/downlink BM process is performed, a beam mismatch problem may occur due to various factors. For example, when the UE moves or rotates, or when a radio channel environment is changed due to movement of a nearby object (e.g., when it was a line-of-sight (LoS) environment and then changed to a non-LoS environment as the beam was blocked), an optimal uplink/downlink beam pair may be changed. At this time, when the UE or the base station fails to track the changed optimal uplink/downlink beam pair (i.e., BM tracking), it may be considered that a beam failure has occurred.

The UE may determine whether beam failure has occurred based on the reception quality of a downlink reference signal (RS). In addition, the UE must report a report message on whether beam failure has occurred or a message for a beam recovery request (beam failure recovery request message, BFRQ message) to the base station. Upon receiving the message, the base station may perform a beam recovery process through various processes such as beam RS transmission or beam report request for beam recovery. This series of beam recovery processes is called a beam failure recovery (BFR) process.

The basic BFR operation includes a BFR process for a special cell (SpCell) (i.e., a primary cell, PCell) or a primary secondary cell (PScell) in which a contention-based PRACH resource exists. The BFR process may consist of a beam failure detection (BFD) process of the UE, a BFRQ transmission process, and a process of monitoring the response of the base station to the BFRQ, and each process may be performed in a serving cell.

### Beam failure detection (BFD)

When the quality value (Q_out) of all PDCCH beams falls below a predefined value, it may be considered that one beam failure instance has occurred. Here, the quality value may be determined based on a hypothetical block error rate (BLER). That is, the theoretical BLER may mean a probability that demodulation of the control information fails when the control information is transmitted on a specific PDCCH.

In addition, one or a plurality of search spaces for monitoring the PDCCH may be configured in the UE, and a PDCCH beam may be configured differently for each search space. In this case, when the quality values of all PDCCH beams fall below the predefined value, it means that the quality values of all PDCCH beams fall below the BLER threshold.

Two methods, which will be described later, may be supported as a method for the UE to receive an indication/configuration of a BFD-RS from the base station for determining whether a beam failure instance has occurred.

As a first method, an implicit configuration method of BFD-RS may be supported. A control resource set (CORESET) ID, which is a resource region in which the PDCCH may be transmitted, is configured in each search space, and RS information (e.g., CSI-RS resource ID, SSB ID) QCLed in terms of spatial RX parameters may be indicated/configured for each CORESET ID. In view of spatial reception parameters, the QCLed RS may be indicated or configured through transmit configuration information (TCI). That is, the BFD-RS may be implicitly configured/indicated to the UE based on QCL information indicated or configured through TCI.

Here, when the base station indicates or configures the RS (i.e., QCL Type D RS) that is QCL from the point of view of the spatial reception parameter to the UE, when the UE receives a specific PDCCH DMRS, the beam used for reception of the RS that is QCL from the point of view of the spatial reception parameter may be used. That is, a signal may be transmitted between spatially QCLed antenna ports through the same transmission beam or similar transmission beams (e.g., when beam widths are different while beam directions are the same/similar).

As a second method, an explicit configuration method of the BFD-RS may be supported. The base station may explicitly configure or indicate the UE to use the beam RS for BFD. In this case, the beam RS may correspond to the 'all PDCCH beams'.

The UE physical layer may inform the MAC sublayer that the BFI(beam failure instance) has occurred whenever an event in which the theoretical BLER measured based on the configured (or indicated) BFD-RS deteriorates beyond a specific threshold value occurs. And, when BFI occurs a certain number of times (e.g. 'beamFailureInstanceMaxCount') within a certain time (e.g., 'BFD timer'), the UE MAC sublayer may determine that a beam failure has occurred and initiate a related RACH operation.

### BFRQ (PRACH based): new beam identification and PRACH transmission

As described above, when more than a certain number of BFIs are generated, the UE may determine that a beam failure has occurred, and may perform a beam failure recovery operation. The UE may perform a BFRQ process based on RACH (i.e., PRACH) as an example of a beam failure recovery operation. Hereinafter, the corresponding BFRQ process will be described in detail.

When a beam failure occurs, the base station may configure a candidate beam RS list ('candidateBeamRSList') including replaceable candidate beam RSs to the terminal through RRC signaling. And, the base station may configure a dedicated PRACH resource for the candidate beam RSs. In this case, the dedicated PRACH resource may be a non-contention based PRACH resource (or a contention free PRACH resource). When an alternative beam RS is not found in the candidate beam RS list, the UE may select at least one of preset SSB resources. And, the UE may transmit a contention-based PRACH to the base station based on at least one selected.

### Enhanced beam failure recovery

When carrier aggregation (CA) is applied, there may be no uplink carrier (UL carrier) in a specific SCell. That is, in the case of an SCell having only a downlink carrier, uplink transmission is impossible. And, even if there is an uplink carrier in the SCell, the contention-based PRACH cannot be configured. Therefore, the PRACH-based BFR process to which CA is applied may be limitedly applied only to the SpCell (PCell or PSCell), and the BFR process may not be supported for the SCell. That is, according to the basic BFR operation, the PRACH-based BFR operation in the SpCell may not be supported in the SCell.

Specifically, when a high-frequency band requiring BFR is configured to the SCell, the PRACH-based BFR process may not be supported in the corresponding high-frequency band. For example, when the PCell is operated in a low frequency band (e.g., 6 GHz or less) and the SCell is operated in a high frequency band (e.g., 30 GHz), there is a problem that the PRACH-based BFR process is not supported in a high-frequency band that requires more BFR support.

In order to solve the above-mentioned problem, the improved BFR operation includes an operation for the BFR of the SCell. For example, the UE may perform BFRQ for the SCell by using a dedicated PUCCH resource for BFRQ configured in the SpCell. Hereinafter, the 'dedicated PUCCH resource' will be referred to as BFR-PUCCH for convenience of description.

The role of the BFR-PUCCH is to report only 'BF occurrence information for SCell' to the base station. And, detailed information related to the generated BF may be transmitted to the base station through the BFR MAC-CE or UCI as a subsequent report.

Here, the detailed information transmitted as the follow-up report may include information on the SCell(s) in which BF has occurred, whether or not there is a new candidate beam for the SCell(s) in which BF has occurred, and (if there is a new candidate beam) the corresponding beam RS ID.

In addition, the BFR-PUCCH may use the same PUCCH format as an SR (scheduling request), and may be defined through the ID of a specific SR for BFR use. If the UL-SCH allocated from the base station exists when the UE detects the BF for the SCell, the UE may omit the BFR-PUCCH transmission procedure like the SR transmission procedure, and transmit the BFR MAC-CE to the base station through the directly allocated UL-SCH.

In a multi-TRP environment, multi-DCI and/or single-DCI-based TRP-specific BFR operations may be applied. First, the base station may explicitly or implicitly set BFD RS for the UE. For example, the base station may configure two or more BFD-RS sets for the UE via RRC or/and MAC-CE. As another example, BFD-RS sets may be configured based on the TCI status per CORESET pool. The UE may determine whether a beam fails per TRP based on the aforementioned BFD-RS sets.

When a beam failure is detected, an SR PUCCH resource may be configured for the UE according to the base station's BFRQ resource. Separate SR PUCCH resources may be configured for each TRP, or the same SR PUCCH resource may be used by two TRPs. The UE may transmit the BFRQ SR PUCCH configured when a beam failure occurs in a specific TRP (to a TRP where no beam failure has occurred). The TRP that receives the BFRQ may transmit a UL Grant DCI to the UE, and the UE may transmit a BFR MAC-CE via a PUCCH scheduled/assigned by the UL Grant DCI. The BFR MAC-CE may include a CC list where the beam failure occurred, information about the failed BFR RS set, information about whether a new beam has occurred, etc.

### PUCCH Configuration and Format

PUCCH may carry uplink control information (UCI). UCI may include SR, HARQ-ACK, CSI, etc. SR may be used to request UL-SCH resources. HARQ-ACK is a reception acknowledgment signal for DL signals. HARQ-ACK responses may include ACK, NACK (negative acknowledgment), DTX (discontinuous transmission), and NACK/DTX. HARQ-ACK may be used interchangeably with A/N, ACK/NACK, and HARQ-ACK/NACK. HARQ-ACK may be generated in TB units or CBG units.

PUCCH formats may be classified according to UCI payload size/transmission length (e.g., number of symbols constituting the PUCCH resource)/transmission structure. PUCCH formats can be classified into short PUCCH (formats 0, 2) and long PUCCH (formats 1, 3, 4) based on transmission length.

For example, when the PUCCH format is 0, the supported UCI payload size is at most 2 bits, and the number of OFDM symbols constituting a single PUCCH may be 1 to 2. For another example, when the PUCCH format is 2, the supported UCI payload size is greater than 2 bits, and the number of OFDM symbols constituting a single PUCCH may be 1 to 2.

As another example, when the PUCCH format is 1, the supported UCI payload size is up to 2 bits, and the number of OFDM symbols constituting a single PUCCH can be 4 to 14. As another example, when the PUCCH format is 3 or 4, the supported UCI payload size is greater than 2 bits, and the number of OFDM symbols constituting a single PUCCH can be 4 to 14.

### Event-based/triggered transmission and reception procedures

In describing the present disclosure, "/" means "and", "or", or "and/or" depending on the context. Additionally, "beam" in the present disclosure may mean a source RS for a "spatial filter" or "spatial relationship," and may be interpreted as a QCL (type-D) RS, a (DL/UL/joint) TCI state, or (in the case of an uplink) a spatial relationship RS.

In wireless communication systems, Layer-1 (e.g., physical layer) based uplink control information has the advantage of having a smaller transmission delay compared to higher layer based control information. For example, in order for a UE to transmit information to a base station via MAC-CE or RRC messages, the UE's SR procedure and the base station's PUSCH allocation procedure (based on the SR) may be required, and there is a delay and overhead associated with this. In addition, generally, the higher the layer information, the longer the time required to decode the information (e.g., decoding time or/and processing time).

On the other hand, in order to transmit Layer-1 based uplink control information, UL physical channel resources (e.g., PUCCH, PUSCH) must be (pre-)configured/allocated to the terminals. Therefore, from the perspective of the base station/network, as the number of UEs increases, the amount of UL resources to be allocated to each UE may increase, and the overall UL resource overhead burden may increase accordingly.

Accordingly, in a wireless communication system, information that needs to be transmitted relatively urgently for the operation of the physical layer (e.g., SR (e.g., SR for PUSCH allocation), HARQ-ACK (e.g., HARQ-ACK for retransmission), CSI (e.g., CSI for scheduling/MCS/precoder determination), beam information (e.g., beam information for (analog) beam determination) can be transmitted and received via the physical layer UCI.

Here, the base station or/and network may determine/control the reporting timing of HARQ-ACK, CSI, beam information, etc., excluding SR. When such network-initiated/triggered reporting procedures are applied, there is a limitation that in environments where the radio channel condition is likely to change rapidly, the reporting timing must be configured/indicated so that the terminal can frequently transmit UCI.

That is, in environments where the wireless channel conditions change rapidly, the UL resource overhead for UCI reporting and the related DL measurement RS overhead may increase, and there may be a problem where the power consumption of the terminal increases due to the frequent UL transmission of the terminal. Additionally, or alternatively, the more terminals there are within the cell/TRP coverage, the greater the UL resource overhead may be because UL resources must be allocated to each UE.

To overcome the limitations of such NW-initiated/triggered reporting, UE-initiated/triggered reporting methods or event-based/triggered reporting methods may be applied.

When a UE-initiated/triggered reporting method or an event-based/triggered reporting method is applied, the UE may decide whether or when to report (such as UCI). That is, the UE may perform the relevant (UCI) report only when necessary (e.g., only when a specific event occurs). Accordingly, UL resource overhead and UE power consumption can be reduced. Additionally, since the UE reports information based on Layer-1/lower layers, faster reporting may be possible.

Accordingly, standardization of UE-initiated/triggered beam reporting methods can be carried out in next-generation wireless communication systems.

In addition, for the efficient operation of UL resources in next-generation wireless communication systems, UE-initiated/triggered or event-based transmission methods can be applied to control information, TB (transport block), and user-plane data transmission procedures transmitted through UCI and/or MAC-CE.

Examples of event-based or UE-initiated/triggered transmission and reception procedures in wireless communication systems include SR and BFR reporting methods. The SR reporting method includes an action of reporting whether PUSCH allocation is required for UL-SCH transmission.

For example, a BFR reporting method includes an operation to report whether a BF has occurred and information related to a new beam. Here, information regarding whether a BF has occurred and information related to a new beam may be transmitted to a base station in an explicit or implicit manner (e.g., a method of transmitting a new beam index as PRACH resource selection information). Additionally, information regarding whether a BF has occurred and information related to a new beam may be transmitted in one step or in multiple steps through one or two UL resources. For example, a UE may transmit BFRQ to a base station via PUCCH and transmit beam information to a base station via MAC-CE on PUCCH.

In describing the present disclosure, information transmitted by a UE to a network via an event-based and/or UE-initiated/triggered transmission method (e.g., SR, BFRQ, new beam information, etc.) shall be collectively referred to as "event information".

Event information may consist of one or more information parts/blocks, and encoding/rate matching/RE mapping may be performed on a part/block basis. Additionally, each information part/unit may be transmitted via different transmission methods. For example, BFRQ may be transmitted and received via UCI as an L1 message, and new beam information may be transmitted and received via MAC-CE as an L2 message.

The present disclosure is described primarily with respect to event-based or terminal-initiated/triggered beam reporting, but is not limited thereto. The method according to the present disclosure may also be applied to other event-based or terminal-initiated/triggered transmission and reception procedures (e.g., UCI reporting procedures, uplink transmission and reception procedures, etc.).

In describing the present disclosure, "beam" may be interpreted/substituted as a source RS for a "spatial filter" or "spatial relation," or as a QCL (Type D) RS, TCI state, or (in the case of an uplink) spatial relation RS. Additionally, "serving beam" may include a beam associated with a PDCCH/PDSCH.

Hereinafter a method to utilize UL resources more efficiently while reducing UL overhead in UE-initiated/triggered transmission methods (e.g., reporting methods) or event-based/triggered transmission methods (e.g., reporting methods) will be described.

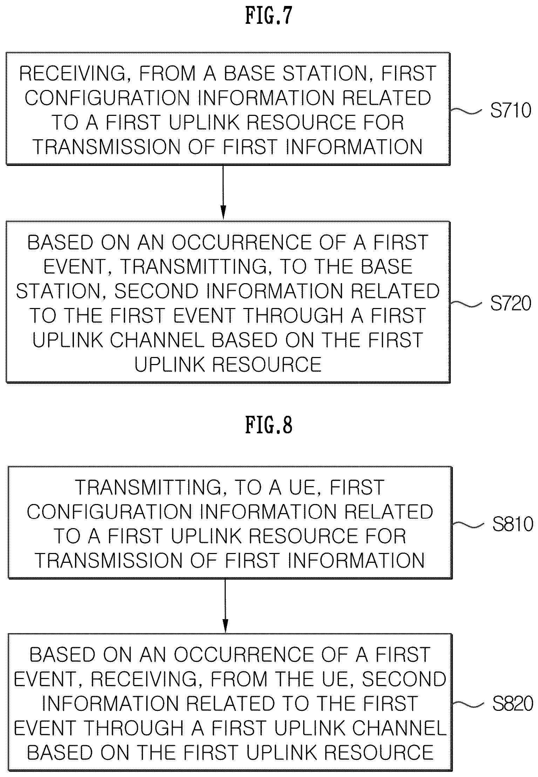

FIG. 7 is a flowchart illustrating a method for a UE to perform a communication procedure as an embodiment of the present disclosure.

The UE may receive first configuration information related to the first uplink resource for transmission of first information from the base station (S710).

For example, the first configuration information may include, but is not limited to, the period and size of the first uplink resource, the period of the first uplink channel based on the first uplink resource, the (max) payload size, the time of transmission of the first information, the priority of the first information or/and the first uplink channel.

Additionally or alternatively, the UE may receive second configuration information related to the first event from the base station. The second configuration information may include, but is not limited to, at least one of the type of the first event, the condition related to the first event, or the resource related to the first event. Additionally or alternatively, the UE may receive third configuration information from the base station regarding whether to include both the first information and the second information related to the first event on the first uplink channel based on the first uplink resource.

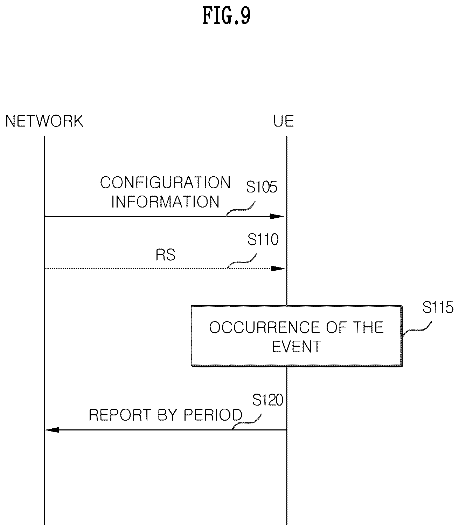

Each of the first configuration information, the second configuration information, and the third configuration information may be transmitted to the UE via one higher layer signaling (e.g., SIB, RRC message, MAC-CE) and/or DCI, but is not limited thereto. Each of the first configuration information, the second configuration information, and the third configuration information may be transmitted to the UE via separate upper layer signaling or/or DCI. Additionally, the UE may receive at least one of the configuration information described with reference to FIG. 9 from the base station.

As an example of the present disclosure, the first information may collectively refer to information intended to be transmitted through the first uplink resource regardless of the occurrence of the first event.

For example, the first information includes channel state information (CSI), and the first uplink resource may include periodic or semi-persistent (physical) uplink control channel resources or (physical) uplink shared channel resources.

As another example, the first information includes at least one of SR, HARQ-ACK, CSI, and LRR (link recovery request), and the first uplink resource may include a configured grant (physical) uplink control channel resource or a (physical) uplink shared channel resource. The first information may be included in the first UCI, but is not limited thereto.

Based on the occurrence of a first event, the UE may transmit second information related to the first event to the base station through a first uplink channel based on a first uplink resource (S720).

Specifically, the UE may monitor whether a first event occurs based on at least one configuration information. For example, the first event may include, but is not limited to, an event related to whether the quality value of a serving beam is below a first threshold, or an event related to the identification of at least one beam whose quality value exceeds a second threshold. The type of the first event may be configured to various events according to the second configuration information. For example, if the type of the first event is an event related to whether the quality value of a serving beam is below a first threshold, the second information may include the quality value of the serving beam, information on the cell associated with the serving beam, information on the new beam, etc. Based on the type of the first event being an event related to the identification of at least one beam whose quality value exceeds a second threshold, the second information may include the index of at least one beam and the quality value of said at least one beam. The second information may be transmitted to a base station via a UCI (e.g., a second UCI), but is not limited thereto.

When a first event is identified as having occurred, the terminal may transmit second information to a base station via a first uplink channel using a first uplink resource for the first information. Here, the first uplink channel may include third information related to whether the second information is information related to the first event. The third information may include an indicator or flag related to the type of second information included in the first uplink channel. However, this is merely one embodiment, and the third information may be omitted on the first uplink channel.

For example, based on the third configuration information, the second information may be included on the first uplink channel and the first information may not be included.

As another example, whether the first information is included on the first uplink channel may be determined based on the priority of the first information and the second information. For example, based on the priority of the second information being higher than the priority of the first information, the first uplink channel may include only the second information and not the first information. Based on the priority of the first information being higher than the priority of the second information, the first uplink channel may include both the first information and the second information.

Additionally or alternatively, whether the first information is included on the first uplink channel may be determined based on the size of the (maximum) payload of the first uplink channel based on the first uplink resource. For example, if the (maximum) payload size of the first uplink channel is greater than or equal to the sum of the sizes of the first information and the second information, the first uplink channel may include both the first information and the second information. If the payload size of the first uplink channel is smaller than the sum of the sizes of the first information and the second information, the first uplink channel may include only the second information and not the first information.

The above-described operation may be performed when the transmission time of the first information and the transmission time of the second information overlap. For example, when the interval between the transmission time of the first information and the transmission time of the second information is less than or equal to a predefined value (e.g., a predefined slot/symbol size, etc.), the UE may transmit the second information related to the first event to the base station through a first uplink channel based on the first uplink resource.

Additionally or alternatively, when the transmission time of the first information and the transmission time of the second information overlap, an operation to determine whether the third configuration information is valid and/or whether the first information and/or the second information described above is included in the first uplink channel (e.g., an operation related to the (max) size of the first uplink payload, priority related to the first/second information, etc.) may be performed.

Additionally or alternatively, the UE may monitor the occurrence of two or more events. For example, the second configuration information may include information related to another event (e.g., the second event). Additionally or alternatively, the UE may receive configuration information related to another event from the base station.

Based on the first event and the second event occurring in the same time duration (e.g., the time of occurrence of the first event and the second event overlaps and/or the time difference between the first event and the second event is less than a predefined value), the UE may identify the event associated with the information to be transmitted through the first uplink channel according to the priority of the first event and the second event.

For example, if the priority of the first event is higher than the priority of the second event, the UE may transmit second information related to the first event to the base station through the first uplink channel. That is, the UE may transmit information related to the event with higher priority to the base station through the first uplink channel in priority.

As an example of the present disclosure, a UE may transmit a second uplink channel containing fourth information indicating that second information related to a first event is included on a first uplink channel to a base station. As an example, based on the occurrence of a first event, the UE may transmit a second uplink channel containing fourth information to a base station and then transmit a first uplink channel containing first information.

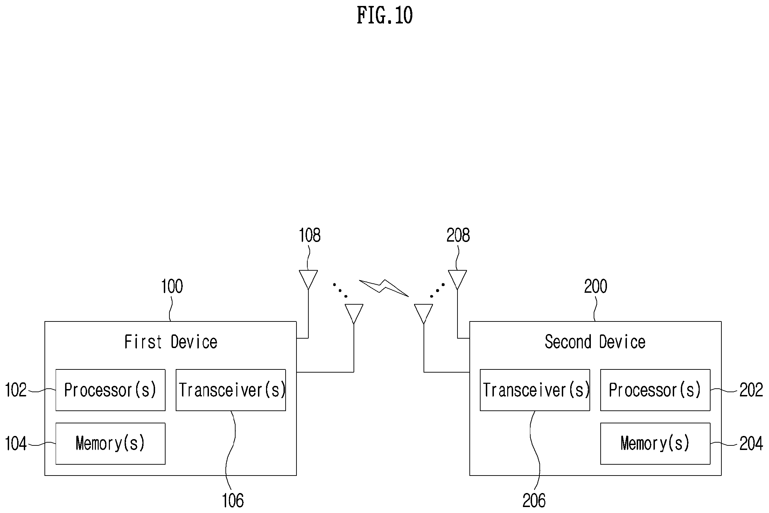

The method described in the example of FIG. 7 can be performed by the first device (100) of FIG. 10. For example, one or more processors (102) of the first device (100) of FIG. 10 may receive first configuration information related to a first uplink resource for transmitting first information from a base station through one or more transceivers (106). Based on the occurrence of a first event, one or more processors (102) may transmit second information related to the first event to a base station through one or more transceivers (106) via a first uplink channel based on the first uplink resource.

Furthermore, one or more memories (104) of the first device (100) may store instructions for performing the method described in the example of FIG. 7 or the examples described below when executed by one or more processors (102).

FIG. 8 is a flowchart illustrating a method for a base station to perform a communication procedure as an embodiment of the present disclosure.

The base station may transmit first configuration information related to the first uplink resource for transmission of first information to the UE (S810).

Examples of one or more configuration information transmitted by a base station have been explained with reference to FIG. 7, so redundant explanations will be omitted.

Based on the occurrence of a first event, the base station may receive second information related to the first event from the UE through a first uplink channel based on a first uplink resource (S820).

As an example of the present disclosure, a base station may receive, from the UE, a second uplink channel that includes fourth information indicating that second information is included on a first uplink channel. And, the base station may receive, from the UE, a first uplink channel that includes second information.

The method described in the example of FIG. 8 can be performed by the second device (200) of FIG. 10. For example, one or more processors (202) of the second device (200) of FIG. 10 can transmit first configuration information related to a first uplink resource for transmitting first information from a UE through one or more transceivers (206). Based on the occurrence of a first event, one or more processors (202) may receive second information related to the first event from a terminal through one or more transceivers (206) via a first uplink channel based on the first uplink resource.

Furthermore, one or more memories (204) of the second device (200) may store instructions for performing the method described in the example of FIG. 8 or the examples described below when executed by one or more processors (202).

Hereinafter, UE-initiated/triggered transmission/reception methods (e.g., reporting methods, etc.) or event-based/triggered transmission/reception methods will be described in more detail.

### Embodiment 1

Embodiment 1 relates to a method for transmitting/reporting event information through UL channel resources for other UL transmission/reporting (e.g., P(periodic)/SP(semi-persistence) CSI/beam reporting on PUCCH/PUSCH, etc.).

The base station may configure/indicate the UE to perform event-based transmission/reporting through the same UL channel resource and the same resource to perform other UCI transmission/reporting (e.g., transmission/reporting unrelated to the event).

When an event occurs, the UE may transmit event information through a UL channel resource (e.g., a resource configured for transmission/reporting unrelated to the event) by using/applying at least one of the methods described below:
Method 1-1: A method of transmitting event information (e.g., transmission/reporting information related to an event) instead of other transmission/reporting information
Method 1-2: A method of transmitting some/all of other transmission/reporting information and some/all of event information (e.g., transmission/reporting information related to an event) together.

That is, Embodiment 1 relates to a method for performing event-based reporting by reusing UL channel resources configured for other UCI transmission/reporting. According to Method 1-1, even without configuring separate UL channel resources for event-based transmission/reporting, the UE may perform event-based transmission/reporting (based on UL channel resources configured for other UCI transmission/reporting), and thus UL channel resources can be saved. Additionally, according to Method 1-2, other transmission/reporting information can be transmitted along with information related to the event.

As an example of the present disclosure, when Method 1-1 is applied, in order to resolve ambiguities related to information decoding/interpretation by a base station, the UE may transmit an indicator or flag indicating whether the information being reported (at each reporting time) is pre-configuration information or event information. As an example, the UE may transmit an indicator or flag indicating the type of information being reported (e.g., whether the information being reported is event-related information or pre-configuration information) to the base station along with the information. Here, the pre-configuration information may include a UCI (not related to an event), and a UL resource for transmitting the UCI may be configured by the base station.

Additionally or alternatively, when the plurality of events (i.e., the plurality of types of events) are applied, the UE may include an indicator or flag, etc., that indicates whether the information currently being reported is related to which event.

As an example of the present disclosure, when Method 1-2 is applied, the UE may transmit and/or report other reporting information (e.g., UCI unrelated to the event) and information related to the event (through UL channel resources for other reporting information).

Additionally or alternatively, the UE may transmit some or all of the other reported information and/or some or all of the information related to the event to the base station, taking into account the capacity of the UL channel resource and/or the importance of the information (e.g., the importance of each of the other reported information and/or the information related to the event).

Additionally, similar to Method 1-1, the UE may transmit information about the type of information being reported and/or information about the event associated with the information being reported to the base station via separate indicators and/or flags. Accordingly, the base station may easily identify and interpret the type of information reported by the UE. For example, the indicators and/or flags may be included in UCI Part 1, and information related to the event may be included in UCI Part 2. By preferentially decoding the indicators and/or flags, the base station may determine the type of information included in UCI Part 2 (e.g., whether only pre-configuration information is included in UCI Part 2, or whether both pre-configuration information and information related to the event are included). Accordingly, the base station may easily determine the payload size of UCI Part 2.

As an example of the present disclosure, a base station may configure/indicate a UE whether to apply Method 1-1 and/or Method 1-2. Additionally or alternatively, one of Method 1-1 and/or Method 1-2 may be adaptively applied depending on the type/priority of information (e.g., information related to an event or/and other reporting information) and/or the capacity of the UL channel (e.g., (max) payload size), etc.

For example, if the importance or priority of information related to an event is high (e.g., if the importance or priority of information related to an event is higher than the importance or priority of information configured in advance), Method 1-1 is applied, and if not, Method 1-2 is applied.

As another example, if the capacity of the UL channel (e.g., the capacity of the UL resource configured by the base station) is sufficient to transmit information related to the event and other reporting information, Method 1-2 is applied, and if not, Method 1-1 is configured/defined to be applied.

### Embodiment 1-1

Embodiment 1-1 relates to a method for performing event-based CSI/beam reporting through PUCCH/PUSCH resources for P/SP CSI/beam reporting.

A base station may configure an uplink resource (e.g., PUCCH or/and PUSCH resource) for periodic (P) or semi-continuous (SP) CSI/beam reporting to a UE. Additionally, the base station may activate P/SP CSI/beam reporting operations via RRC/MAC-CE/DCI, etc. The UE may periodically report CSI/beam information requested by the base station via the uplink resource. Additionally, or alternatively, when an "event" occurs, the UE may transmit information related to the event instead of CSI/beam information (Method 1-1), or transmit information related to the event and CSI/beam information together (Method 1-2).

### Embodiment 1-2

Embodiment 1-2 relate to a method for performing event-based CSI/beam reporting operations through a configured grant (CG) uplink resource (e.g., PUSCH resource) (for TB transmission).

The base station may configure a CG uplink resource for the UE, and the UE may perform TB transmission through the configured CG uplink resource. Additionally or alternatively, the UE may perform event-based reporting (e.g., event-based CSI/beam/UCI reporting, etc.) using the CG uplink resource.

In particular, when event-based reporting is performed via UCI and an event occurs or Method 1-1 applies, at the time of transmission of the relevant CG uplink resource (e.g., at the time of transmission of the PUSCH resource), an uplink containing UCI (e.g., PUSCH) may be transmitted to the base station. As another example, when the occurrence of the relevant event and TB transmission occur simultaneously (e.g., when Method 1-2 applies), an uplink including UCI and UL-SCH may be transmitted to the base station at the time of transmission of the relevant uplink resource.

For example, assume a case where event-based reporting is performed via MAC-CE and information related to the event and TB transmission occur simultaneously (e.g., when Method 1-2 is applied). In this case, the MAC-CE and the TB can be transmitted together to the base station via UL-SCH transmitted at the time of transmission of the CG uplink resource.

For example, when considering various applications such as voice calls, the above TB transmission may have the characteristics of event-based transmission (e.g., occurrence of voice information/TB). Event-based TB transmission may have a higher priority than event-based CSI/beam/UCI reporting. In this case, (unlike Method 1-1) if an event related to TB transmission and an event related to CSI/beam/UCI occur simultaneously, the UE may perform TB transmission first.

The method associated with Example 1 (e.g., Method 1 and Method 2, etc.) may be applied to various operations as well as to the above-described Embodiments 1-1 and 1-2. For example, the method associated with Embodiment 1 may be applied to non-periodic CSI/beam reporting. In this case, the base station may configure event-based transmission/reporting as an "add-on feature" for the UE.

### Embodiment 1-3

Embodiments 1-3 relate to a method for performing multiple event-based transmissions/reports through the same UL channel resource. That is, the Embodiment 1-3 is an extension of Embodiments 1, 1-1, 1-2 and 1-4 to multiple event-based transmission/reporting techniques.

For example, a base station may configure a UE to report event information #1 for event #1 and event information #2 for event #2 based on the same UL channel resource. Accordingly, if only event #1 occurs at a specific reporting time, the UE may report event information #1 to the base station via the UL channel. If only event #2 occurs at a specific reporting time, the UE may report event information #2 to the base station via the UL channel. If both event #1 and event #2 occur at a specific reporting time, the UE may report one of event information #1 and event information #2 to the base station via the UL channel (e.g., Method 1-1), or report all/part of event information #1 and all/part of event information #2 to the base station (e.g., Method 1-2).

For the operation described above, priorities may be defined/configured by event or by event information. For example, if multiple events occur simultaneously or within a predefined time interval, the UE may be defined/configured/indicated to transmit/report to the base station the event or event information having the highest priority first.

In the example described above, two events (e.g., Event #1 and Event #2) or two event information (e.g., Event Information #1 and Event Information #2) were described, but the number of events and event information is not limited. That is, the method described above (e.g., transmitting events/event information through the same UL channel resource) can be extended to three or more events/event information.

### Embodiment 1-4

Embodiments 1-4 relate to a method of using separate UL channel resources according to the configuration of reporting information. The Embodiment 1-4 relates to a method of extending Embodiments 1, 1-1, 1-2, and 1-3.

The base station may separately configure UL channel resources (e.g., PUCCH resources and/or PUSCH resources, etc.) to be used for each configuration of reported information for the terminal. The UE may perform the information/reporting through the UL channel resources according to the configuration of the information to be transmitted/reported at that time (e.g., information on whether an event has occurred, etc.). For example, when Method 1-1 or Method 1-2 is applied, the UE may use different UL channel resource formats depending on whether event information is transmitted (considering the payload size and reliability suitable for each information configuration).

Additionally or alternatively, when one of the two pieces of information (e.g., reporting information related to an event and other reporting information (e.g., information not related to an event)) is transmitted or the two pieces of information are transmitted together, a rule may be defined or configured regarding which of the UL channel resources to use/apply according to the configuration of each piece of information.

For example, assume that UL channel resource #1 for event reporting and UL channel resource 2 for "transmission/reporting of other information" are configured for a terminal. In this case, when an event occurs, Method 1-1 or Method 1-2 may be applied, and whether to report the information through UL channel resource #1 or UL channel resource #2 may be configured/defined as a rule.

For example, a base station may verify the composition of information transmitted by the UE (e.g., information about whether an event has occurred) by blind detection of multiple pre-configured UL channel resource candidates at each time the terminal reports.

Additionally or alternatively, the base station may configure the transmission/reporting (possible) time and/or period for each piece of information and/or related UL channel resources for the UE. For example, when the method according to Example 1 is applied, i) the period of event reporting or the period of the UL channel resource corresponding to the event reporting and ii) the period of "other transmission/reporting" or the period of the UL channel resource related thereto may each be configured for the UE. Additionally, i) the slot offset applied to the period of event reporting or the UL channel resource corresponding to the event reporting and ii) the slot offset applied to the period of "other transmission/reporting" or the UL channel resource related thereto may each be configured for the UE.

Herein, the methods according to the above-described Embodiments 1, 1-1, 1-2, 1-3 and 1-4 may be utilized only when the reporting (possible) times of each information overlap. When the reporting (possible) times of each information do not overlap, the UE may use the UL channel resources configured for each information/transmission.

For example, assume that an event reporting period/resource and another UCI (or UL) transmission period/resource are each configured for a UE. At an event reporting time that does not overlap with another UCI (or UL) transmission time, the UE may transmit information related to the event to the base station through the resource configured for the event reporting. At an event reporting time that overlaps with another UCI (or UL) transmission time, the UE may transmit information related to the event to the base station through the resource configured for the other UCI transmission.

As another example, if the event reporting period is a multiple of another UCI (or UL) transmission period, at another UCI (or UL) transmission time that does not overlap with the event reporting time, the UE may perform another UCI (or UL) transmission through the resources configured for the other UCI (or UL) transmission. And, at another UCI (or UL) transmission time that overlaps with the event reporting time, the UE may perform another UCI transmission through the resources configured for the event reporting.

In one example of the present disclosure, if event information is divided into one or more information parts/blocks, the method(s) according to Embodiment 1 and the detailed embodiments thereof may be applied to only some of the information parts/blocks among the one or more information parts/blocks. For example, if information regarding whether an event has occurred is transmitted via a UCI having a small number of bits, such as SR/BFRQ, and the remaining event information (e.g., information about a new beam, etc.) is transmitted via a UCI or MAC-CE having a large number of bits, the method(s) according to Embodiment 1 and the detailed embodiments thereof may be applied/utilized to only one of the two event information parts/blocks.

For example, the method(s) according to Embodiment 1 and its detailed embodiments may be applied only to event information applied through a UCI having a small number of bits, or only to event information transmitted through a UCI having a large number of bits. However, this is merely one example, and the method(s) according to Embodiment 1 and its detailed embodiments may be applied to all information related to the event.

### Embodiment 2

Embodiment 2 relates to a method for event-based beam reporting through a (dedicated) uplink resource (e.g., PUCCH resource or PUSCH resource, etc.).

Unlike the method according to Embodiment 1 and its detailed Embodiments, a dedicated UL channel resource for event-based beam reporting may be configured/used. For example, information related to an event, including whether an event has occurred, may be defined/configured as a UCI that occurs/is generated when a specific event occurs (such as a positive SR (scheduling request)). And, a separate PUCCH resource may be configured for the terminal to transmit the information/UCI.

To this end, PUCCH resources having PUCCH formats capable of transmitting information of 2 bits or less (e.g., PUCCH format 0/1), as well as PUCCH formats capable of transmitting information of more than 2 bits (e.g., PUCCH format 2/3/4), can be configured/used for the UE for event-based beam reporting purposes. That is, the UE may transmit a PUCCH containing event-related information to the base station based on the PUCCH resources having the PUCCH formats described above. Here, methods such as UCI encoding/multiplexing/RE mapping applied to CSI can also be applied to PUCCH resources.

Here, if the PUCCH resource is a resource that is transmitted only when an event occurs, the base station cannot predict the timing of the event, so an orthogonal/independent PUCCH resource may be allocated to each UE for each event. Accordingly, a problem arises in which the UL resource overhead increases in proportion to the PUCCH resource. A similar problem existed in the case of SR PUCCH resources in basic wireless communication systems. However, in this case, a PUCCH resource using a small time/frequency code resource of 2 bits or less was used, and this did not become a major problem.

To address the problem described above, the (max) payload size of the beam report information reported as event information can be limited to reduce the PUCCH resource overhead associated with the report.

As an example of the present disclosure, when a UE performs an event-based beam reporting operation (via a dedicated PUCCH resource), the UE may transmit beam indicators (e.g., CRI, SSBRI) and/or beam quality value information (e.g., L1-RSRP, L1-SINR) to a base station in addition to information regarding whether an event has occurred. In this case, the beam indicators and/or beam quality value information may be limited as described below.

For example, with respect to beam indicators, the number of reported beams may be limited or fixed. For example, only information about a single beam (e.g., indicator information for a single beam) may be reported to the base station. Additionally or alternatively, one or more beam groups/sets may be configured, and a beam group/set ID may be reported to the base station instead of a beam ID.

For example, beam quality information may be omitted, or only coarse beam quality information may be transmitted to the base station through a predefined number of bits (e.g., 3 to 4 bits). Additionally or alternatively, beam quality value information may include the difference in quality value of a target beam relative to a specific beam (e.g., RSRP/SINR difference).

As an example of coarsely configuring the beam quality value in Example 2, the payload size can be reduced by considering a step size of n dB or more for the L1-RSRP/SINR value (e.g., n is a value greater than 1 (e.g., 2)). In a basic wireless communication system, the L1-RSRP/SINR value is reported using 7 bits ([-140, -44] dBm) with a 1 dB step size, but the method described above can set the step size value to a large value.

In addition, regarding the method of configuring the difference in quality values of a target beam relative to a specific beam, the specific beam may include i) a designated TCI, ii) a CRI/SSBRI having the highest RSRP/SINR in the beam reports configured by the base station and/or terminal-initiated, iii) a CORESET TCI, iv) the first/highest RSRP/SINR among the reported RSRP/SINRs, etc. The case related to iv) may apply when reporting RSRP/SINRs for two or more beams.

Additionally or alternatively, if two or more TCI/CORESETpools are configured/indicated to the UE for mTRP operation, etc., the UE may configure/transmit beam information (e.g., beam indicator and/or beam quality value information) to which the method described above is applied based on one of the two or more TCI/CORESETpools.

FIG. 9 is a diagram illustrating a signaling procedure of a network side and a UE according to one embodiment of the present disclosure.

FIG. 9 illustrates an example of signaling between a network side and a terminal (UE) in an M-TRP situation to which the examples of the above-described disclosure (e.g., Embodiment 1, Embodiment 1-1, Embodiment 1-2, Embodiment 1-3, Embodiment 1-4, Embodiment 2 or/and a combination of one or more detailed Embodiments of the example(s)) may be applied.

Here, UE/a network side is illustrative and may be applied by being substituted with a variety of devices as described by referring to FIG. 10. FIG. 9 is for convenience of description, and it does not limit a scope of the present disclosure. In addition, some step(s) shown in FIG. 9 may be omitted according to a situation and/or a configuration, etc. In addition, the above-described uplink transmission and reception operation, a M-TRP-related operation, etc. may be referred to or used for an operation of a network side/UE in FIG. 9.

In the following description, a network side may be one base station including a plurality of TRPs or may be one cell including a plurality of TRPs. Alternatively, a network side may include a plurality of RRHs(remote radio head)/RRUs(remote radio unit).

In an example, an ideal/non-ideal backhaul may be configured between TRP 1 and TRP 2 configuring a network side. In addition, the following description is described based on a plurality of TRPs, but it may be equally extended and applied to transmission through a plurality of panels/cells and may be extended and applied to transmission through a plurality of RRHs/RRUs, etc.

In addition, it is described based on a "TRP" in the following description, but as described above, a "TRP" may be applied by being substituted with an expression such as a panel, an antenna array, a cell (e.g., a macro cell/a small cell/a pico cell, etc.), a TP (transmission point), a base station(gNB, etc.), etc. As described above, a TRP may be classified according to information on a CORESET group (or a CORESET pool) (e.g., a CORESET index, an ID).

In an example, when one UE is configured to perform transmission and reception with a plurality of TRPs (or cells), it may mean that a plurality of CORESET groups (or CORESET pools) are configured for one UE. A configuration on such a CORESET group (or a CORESET pool) may be performed through higher layer signaling (e.g., RRC signaling, etc.).

In addition, a base station may generally mean an object which performs transmission and reception of data with a UE. For example, the base station may be a concept which includes at least one TP(Transmission Point), at least one TRP(Transmission and Reception Point), etc. In addition, a TP and/or a TRP may include a panel, a transmission and reception unit, etc. of a base station.

The UE may receive configuration information from the network (S105).

For example, the configuration information may include event-related configuration information (or/and event-based reporting-related configuration information), reporting information configuration information, and UL channel resource information for reporting (e.g., PUCCH/PUSCH). For example, the event-related configuration information may include the type of event, criteria related to the event, thresholds, etc. That is, the event-related configuration information may include criteria and/or thresholds for determining whether an event has occurred or/and the type of event, etc.

For example, a UL channel resource for reporting may include information for configuring a UL channel resource for reporting event-related information, etc. and/or information for describing a resource for reporting other information (e.g., information for reporting separate information not related to the event).

Additionally or alternatively, the configuration information may include configuration information associated with each of Embodiment 1, Embodiment 1-1, Embodiment 1-2, Embodiment 1-3, Embodiment 1-4, Embodiment 2, or/and one or more combinations of the detailed embodiments. For example, the configuration information may include information for configuring one of Method 1-1 and Method 1-2 according to Embodiment 1. For another example, the configuration information may include information for configuring a method of configuring reporting information according to Embodiment 2.

The configuration information described above may be transmitted to the UE via higher layer signaling (e.g., SIB, RRC message, MAC CE, etc.), but is not limited thereto. Additionally, the configuration information described above may be transmitted to the UE via separate higher layer signaling, but some configuration information may be transmitted to the UE via a single higher layer signaling.

The base station may transmit RS (e.g., CSI-RS, SSB, etc.) related to an event (e.g., an event related to configuration information) to the UE (S110). The UE may perform measurements based on the RS received from the base station and monitor whether an event has occurred based on the measurement results (S115). That is, the UE may monitor whether an event has occurred based on configuration information.

If the event/condition is not related to RS reception/measurement according to the characteristics/definition/configuration of the "event" or/and the triggering condition of the UL channel resource, step S110 may be omitted, and the UE may perform separate event occurrence monitoring according to the triggering condition.

The UE may report/transmit information related to the event and/or "other information" to the base station based on the configuration information and RS measurement (S120). For example, the UE may report/transmit information related to the event and/or "other information" to the base station according to the period configured by the configuration information.

For example, the UE may perform a reporting operation according to the method(s) according to Embodiment 1, Embodiment 1-1, Embodiment 1-2, Embodiment 1-3, Embodiment 1-4, Embodiment 2 or/and a combination of one or more of the detailed embodiments.

### General Device to which the Present Disclosure may be applied

FIG. 10 is a diagram which illustrates a block diagram of a wireless communication system according to an embodiment of the present disclosure.

In reference to FIG. 10, a first device 100 and a second device 200 may transmit and receive a wireless signal through a variety of radio access technologies (e.g., LTE, NR).

A first device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts included in the present disclosure.

For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104.

A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts included in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/circuit/chip.

A second device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts included in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts included in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts included in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts included in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts included in the present disclosure may be implemented by using a firmware or a software and a firmware or a software may be implemented to include a module, a procedure, a function, etc. A firmware or a software configured to perform description, functions, procedures, proposals, methods and/or operation flow charts included in the present disclosure may be included in one or more processors 102, 202 or may be stored in one or more memories 104, 204 and driven by one or more processors 102, 202. Description, functions, procedures, proposals, methods and/or operation flow charts included in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. included in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. included in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefore, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device 100, 200 of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

### [Industrial Applicability]

A method proposed by the present disclosure is mainly described based on an example applied to 3GPP LTE/LTE-A, 5G system, but may be applied to various wireless communication systems other than the 3GPP LTE/LTE-A, 5G system.

## Claims

1. A method comprising:
receiving, by a user equipment (UE) from a base station, first configuration information related to a first uplink resource for transmission of first information; and
based on an occurrence of a first event, transmitting, by the UE to the base station, second information related to the first event through a first uplink channel based on the first uplink resource,
wherein the first uplink channel includes third information related to whether the second information is information related to the first event.

2. The method of claim 1, wherein:
based on a priority of the second information being higher than a priority of the first information, the first uplink channel does not include the first information, and
based on the priority of the first information being higher than the priority of the second information, the first uplink channel includes the first information

3. The method of claim 1, wherein:
if a payload size of the first uplink channel is greater than or equal to a sum of sizes of the first information and the second information, the first uplink channel includes the first information, and
if the payload size of the first uplink channel is smaller than a sum of the sizes of the first information and the second information, the first uplink channel does not include the first information.

4. The method of claim 1, wherein:
transmission time of the first information and transmission time of the second information overlap.

5. The method of claim 1, wherein:
based on the first and second events occurring in a same time interval, a priority of the first event is higher than a priority of the second event.

6. The method of claim 1, wherein:
a second uplink channel including fourth information indicating that the second information is included on the first uplink channel is transmitted from the UE to the base station.

7. The method of claim 1, wherein:
second configuration information including at least one of a type of the first event, a condition related to the first event, or a resource related to the first event is transmitted from the UE to the base station.

8. The method of claim 1, wherein:
the first information includes channel state information (CSI), and
the first uplink resource includes a periodic or semi-persistent uplink control channel resource or an uplink shared channel resource.

9. The method of claim 1, wherein:
the first information includes at least one of a scheduling request (SR), a HARQ-ACK (hybrid automatic repeat request-acknowledgement), or a link recovery repeat (LRR), and
the first uplink resource includes a configured grant uplink control channel resource or an uplink shared channel resource.

10. The method of claim 1, wherein:
the first event includes an event related to whether a quality value of a serving beam is less than a first threshold value or an event related to an identification of at least one beam whose beam quality value exceeds a second threshold value.

11. The method of claim 1, wherein:
third configuration information related to whether to include both the first information and the second information on the first uplink channel is transmitted from the UE to the base station.

12. The method of claim 1, wherein:
based on the first event being an event related to whether a quality value of the serving beam is less than the first threshold, the second information includes at least one of the quality value of the serving beam and information on a cell related to the serving beam or information on a new beam for beam failure recovery, and
based on the first event being an event related to an identification of at least one beam whose beam quality value exceeds the second threshold, the second information includes at least one of an index of the at least one beam or the quality value of the at least one beam.

13. A user equipment (UE) comprising:
at least one transceiver; and
at least one processor coupled to the at least one transceiver,
the at least one processor is configured to:
receive, from a base station through the at least one transceiver, first configuration information related to a first uplink resource for transmission of first information; and
based on an occurrence of a first event, transmit, to the base station through the at least one transceiver, second information related to the first event through a first uplink channel based on the first uplink resource,
wherein the first uplink channel includes third information related to whether the second information is information related to the first event.

14. A method comprising:
transmitting, by a base station to a user equipment (UE), first configuration information related to a first uplink resource for transmission of first information; and
based on an occurrence of a first event, receiving, by the base station from the UE, second information related to the first event through a first uplink channel based on the first uplink resource,
wherein the first uplink channel includes third information related to whether the second information is information related to the first event.

15. A base station comprising:
at least one transceiver; and
at least one processor coupled to the at least one transceiver,
the at least one processor is configured to:
transmit, to a user equipment (UE) through the at least one transceiver, first configuration information related to a first uplink resource for transmission of first information; and
based on an occurrence of a first event, receive, from the UE through the at least one transceiver, second information related to the first event through a first uplink channel based on the first uplink resource,
wherein the first uplink channel includes third information related to whether the second information is information related to the first event.

16. A processing apparatus configured to control a user equipment (UE), the processing apparatus comprising:
one or more processors; and
one or more computer memories operably coupled to the one or more processors and storing instructions that, based on being executed by the one or more processors, perform a method according to any one of claims 1 to 11.

17. One or more non-transitory computer-readable media storing one or more instructions,
wherein the one or more instructions are executed by one or more processors to control an apparatus to perform a method according to any one of claims 1 to 11.
